# EUROPÄISCHE PATENTSCHRIFT

(11) **EP 2 549 253 B1**
(45) Veröffentlichungstag und Bekanntmachung des Hinweises auf die Patenterteilung: **09.08.2017**
(21) Anmeldenummer: 12158446.0
(22) Anmeldetag: 07.03.2012
(51) Int. Cl.: G01L 1/22, G01L 5/16

(54) **Meßkörper, Kraftmeßsensor und Meßanordnung zur Messung von Kräften**
Measuring body, force sensor and measuring assembly for measuring forces
Corps de mesure, capteur de mesure de force et agencement de mesure destinés à la mesure de forces

(30) Priorität: 19.07.2011 US 201161509185 P
(43) Veröffentlichungstag der Anmeldung: 23.01.2013
(60) Teilanmeldung: 17174538.3
(73) Patentinhaber: Magna Steyr Fahrzeugtechnik AG & Co KG, 8041 Graz (AT)
(72) Erfinder: Robier, Ferdinand, 8071 Wagersbach (AT); Mitsch, Marcus, 3412 Kierling (AT); Mehlmauer, Andreas, 8160 Weiz (AT)
(74) Vertreter: Zangger, Bernd

(56) Entgegenhaltungen:
- WO-A1-89/04469
- DE-A1- 19 525 231
- DE-U1- 8 909 048
- US-A- 4 094 192
- US-A1- 2009 007 696

## Beschreibung

### TECHNISCHES GEBIET

Die Erfindung betrifft einen Meßkörper zur Messung von Kräften, umfassend zwei voneinander beabstandete Basisteile, mit je wenigstens einer Montagefläche zur Einleitung der zu messenden Kräfte, vier identische, voneinander beabstandete, entlang einer Längsachse ausgerichtete und in einem Quadrat angeordnete Stege, welche mit den beiden Basisteilen an in der Längsachse beabstandeten Verbindungsflächen verbunden sind, sowie Kraftmeßsensoren an jedem der genannten Stege. Weiterhin betrifft die Erfindung einen Kraftmeßsensor sowie eine Meßanordnung zur Messung von Kräften, insbesondere im Zusammenhang mit dem eingangs erwähnten Meßkörper.

### STAND DER TECHNIK

Die Messung von Kräften mit Hilfe der Verformung von Meßkörpern ist prinzipiell bekannt. Beispielsweise offenbart die CN 2156494 Y dazu einen Meßkörper, welcher in einem Abschnitt vier voneinander beabstandete, entlang einer Längsachse ausgerichtete Stege umfasst, an denen Kraftmeßsensoren angebracht sind. Mit diesen können Kräfte normal auf die genannte Längsachse ermittelt werden. Zur Messung von Kräften in der genannten Längsrichtung weist der aus der CN 2156494 Y bekannte Meßkörper in einem weiteren Abschnitt zwei zusätzliche Stege mit Kraftmeßsensoren auf. Weitere Beispiele für Meßkörper sind etwa aus der DE 37 01 372 A1 und der US 3,696,317 A bekannt.

Nachteilig an dem in der CN 2156494 Y offenbarten Meßkörper ist, dass er relativ kompliziert aufgebaut ist und auch volumensmäßig relativ groß ist.

Aus der US 2009/007696 A1 ist ein Meßkörper bekannt, der vier Stege zwischen zwei Basisflächen aufweist, wobei die Stege an die Basisflächen geschweißt sind. Dehnmessstreifen sind auf den Stegen einzeln verteilt.

Aus DE 195 25 231 A1 ist ein Drehmomentsensor bekannt, mit zwei in axialem Abstand angeordneten Flanschen, die über vier Stege miteinander verbunden sind.

### OFFENBARUNG DER ERFINDUNG

Die Aufgabe der Erfindung ist es, einen verbesserten Meßkörper, einen verbesserten Kraftmeßsensor und eine verbesserte Meßanordnung anzugeben. Insbesondere soll eine dreidimensionale Kraftmessung bei vereinfachtem Aufbau ermöglicht werden.

Die Aufgabe der Erfindung wird mit einem Meßkörper der eingangs genannten Art gelöst, mit Merkmalen gemäß Anspruch 1.

Bevorzugt benutzt die Erfindung einen Kraftmeßsensor, umfassend
- zwei erste Dehnmeßstreifen zur Messung einer Kraft in einer ersten Richtung,
- zwei zweite Dehnmeßstreifen zur Messung einer Kraft normal zur genannten Richtung,
- zumindest einen dritten Dehnmeßstreifen zur Messung einer Kraft in einem Winkel von +45° zur genannten Richtung und
- zumindest einen vierten Dehnmeßstreifen zur Messung einer Kraft in einem Winkel von -45° zur genannten Richtung auf einem gemeinsamen Substrat.

### Insbesondere weist der vorgestellte Kraftmeßsensor

- zwei dritte Dehnmeßstreifen zur Messung einer Kraft in einem Winkel von +45° zur genannten Richtung und
- zwei vierte Dehnmeßstreifen zur Messung einer Kraft in einem Winkel von -45° zur genannten Richtung auf.

Darüber hinaus wird die Aufgabe der Erfindung auch mit einer Meßanordnung mit einem Meßkörper der oben erwähnten Art gelöst, wobei in den vier Abschnitten einer Wheatstoneschen Meßbrücke zur Messung einer Kraft in der genannten Längsachse des Meßkörpers bei gleichbleibendem Richtungssinn angeordnet sind:
- in einem ersten Abschnitt die ersten Einzelsensoren eines ersten Stegs und die ersten Einzelsensoren eines gegenüberliegenden dritten Stegs,
- in einem zweiten Abschnitt die zweiten Einzelsensoren eines zum ersten Steg benachbarten zweiten Stegs und die zweiten Einzelsensoren eines dem zweiten Steg gegenüberliegenden vierten Stegs,

- in einem dritten Abschnitt die ersten Einzelsensoren des zweiten Stegs und die ersten Einzelsensoren des vierten Stegs und
- in einem vierten Abschnitt die zweiten Einzelsensoren des ersten Stegs und die zweiten Einzelsensoren des dritten Stegs.

Schließlich wird die Aufgabe der Erfindung auch mit einer Meßanordnung mit einem Meßkörper der oben erwähnten Art gelöst, wobei, in den vier Abschnitten einer Wheatstoneschen Meßbrücke zur Messung einer Kraft normal auf die Meßebene eines ersten Stegs bei gleichbleibendem Richtungssinn angeordnet sind:
- in einem ersten Abschnitt die dritten Einzelsensoren eines dem ersten Steg benachbarten zweiten Stegs,
- in einem zweiten Abschnitt die vierten Einzelsensoren des zweiten Stegs,
- in einem dritten Abschnitt die vierten Einzelsensoren eines dem zweiten Steg ,gegenüberliegenden vierten Stegs und
- in einem vierten Abschnitt die dritten Einzelsensoren des vierten Stegs.

Auf diese Weise wird eine dreidimensionale Kraftmessung mit nur geringem Aufwand ermöglicht. Der dazu nötige Meßkörper ist relativ einfach aufgebaut und benötigt nur geringes Bauvolumen.

Der Begriff "Kraftmeßsensor" ist dabei so zu verstehen, dass es sich um einen Sensor handelt, über welchen letztlich die Kraft ermittelt werden kann. Direkt gemessen wird meistens nicht die Kraft, sondern bevorzugt eine Dehnung.

Ein "Kraftmeßsensor" bildet im Rahmen der Erfindung eine Gruppe von Einzelsensoren zur Messung einer Kraft oder Dehnung in nur einer Richtung.

"Im Quadrat angeordnet" bedeutet im Rahmen der Erfindung, dass die Schwerpunkte der Stegquerschnitte in der Mitte der Seitenkanten eines Quadrats liegen, die Querschnitte zweier benachbarter Stege um jeweils 90° gegeneinander verdreht sind und der Gesamtquerschnitt der Stege symmetrisch um die Hauptachsen des genannten Quadrats ist.

Die "Längsachse der Stege" verläuft durch den Schwerpunkt des genannten Quadrats und ist normal zu diesem ausgerichtet.

Die "Meßebene" ist jene Ebene, in der die an einem Steg angebrachten Kraftmeßsensoren angeordnet sind.

Weitere vorteilhafte Ausgestaltungen und Weiterbildungen der Erfindung ergeben sich nun aus den Unteransprüchen sowie aus der Beschreibung in Zusammenschau mit den Figuren.

Eine günstige Variante eines Meßkörpers ergibt sich, wenn die Kraftmeßsensoren an jedem der Stege identisch sind. Auf diese Weise ergeben sich symmetrische Verhältnisse bei den von den Kraftmeßsensoren erhaltenen Signalen, wodurch die Auswertung derselben vereinfacht wird.

Vorteilhaft ist es, wenn jeder Steg eine Meßebene aufweist, die parallel zur Längsachse der Stege ausgerichtet ist, insbesondere zusätzlich parallel zu einer Seitenkante des genannten Quadrats, und wenn in jeder Meßebene eine identische und symmetrische Anordnung von Kraftmeßsensoren vorgesehen ist, jeweils umfassend
- je zwei erste Einzelsensoren zur Messung einer Kraft in der genannten Längsachse des Meßkörpers,
- je zwei zweite Einzelsensoren zur Messung einer Kraft normal zur genannten Längsachse,
- je zumindest ein dritter Einzelsensorzur Messung einer Kraft in einem Winkel von +45° zur genannten Längsachse und
- je zumindest ein vierter Einzelsensorzur Messung einer Kraft in einem Winkel von - 45° zur genannten Längsachse.
Auf diese Weise ist es möglich, mit dem Meßkörper Kräfte in allen drei Dimensionen zu messen, wobei die Kraftmessung beziehungsweise die Auswertung der erhaltenen Meßsignale durch den symmetrischen Aufbau besonders genau ist. Durch den erfindungsgemäßen Aufbau ist das Übersprechen unbelasteter Zweige/Kanäle minimiert, sodass die Meßgenauigkeit steigt. Der Meßfehler wird dabei einerseits durch den symmetrischen Aufbau des Meßkörpers und andererseits durch die gewählte Anordnung der Einzelsensoren, bevorzugt Dehnmeßstreifen, minimiert.

Besonders vorteilhaft ist es in diesem Zusammenhang auch, wenn
- je zwei dritte Einzelsensoren zur Messung einer Kraft in einem Winkel von +45° zur genannten Längsachse und
- je zwei vierte Einzelsensoren zur Messung einer Kraft in einem Winkel von -45° zur genannten Längsachse angeordnet sind.

Dadurch ist es möglich einen Kraftmeßsensor zu schaffen, der um zwei Achsen symmetrisch, beziehungsweise punktsymmetrisch ist. Die Kraftmessung wird durch die Symmetrie noch weiter vereinfacht.

Günstig ist es, wenn die Einzelsensoren als Dehnmeßstreifen ausgebildet sind. Auf diese Weise kann der Meßkörper, der Kraftmeßsensor beziehungsweise die Meßanordnung leicht in die Praxis umgesetzt werden, da auf leicht verfügbare und zuverlässige Meßsensoren zurückgegriffen wird.

Günstig ist es auch, wenn die Basisteile des Meßkörpers identisch sind, insbesondere mit zueinander parallelen Montageflächen. Dadurch kann der Meßkörper in zwei verschiedenen Lagen bei ansonsten gleicher Funktion verwendet werden. Fehler beim Einbau eines Meßkörpers in ein zu vermessendes Bauteil können somit vermieden werden.

Erfindungsgemäß sind die Stege als parallel zur Längsachse ausgerichtete Prismen ausgebildetund haben einen rechteckförmigen Querschnitt. Dadurch können die Stege leicht hergestellt werden. Besonders vorteilhaft ist es, wenn der Meßkörper punktsymmetrisch ausgebildet ist. Wegen des hohen Grads an Symmetrie ist die Kraftmessung beziehungsweise die Auswertung der Meßsignale unter Verwendung eines solchen Meßkörpers besonders einfach.

Erfindungsgemäße ist der Meßkörper einstückig ausgebildet. Auf diese Weise können weitgehend konstante Materialeigenschaften im Meßkörper und somit hohe Meßgenauigkeit sichergestellt werden.

Günstig ist es, wenn die Breite eines Steges geringer ist als der Abstand seiner beiden benachbarten Stege. Auf diese Weise wird sichergestellt, dass sich die Stege frei bewegen können. Weiterhin kann so auch ein Zugang für ein Fräswerkzeug zur Verfügung gestellt werden, wenn der Meßkörper zum Beispiel aus dem Vollen gefräst wird.

An dieser Stelle wird angemerkt, dass sich die zum Meßkörper offenbarten Varianten und die daraus resultierenden Vorteile gleichermaßen auf den Kraftmeßsensor sowie auf die Meßanordnung beziehen und umgekehrt.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: ein erstes Beispiel eines Meßkörpers;
- Figur 2: wie Fig. 1, nur mit podestartigen Teilen in seinem Inneren;
- Figur 3: wie Fig. 2 nur mit sich mittig verjüngenden Stegen;
- Figur 4: ein erstes Beispiel für einen Kraftsensor mit mehreren Einzelsensoren;
- Figur 5: wie Fig. 4, nur mit zusätzlichen, schräg angeordneten Kraftmeßsensoren;
- Figur 6: eine beispielhafte Meßanordnung zur Messung von Kräften in z-Richtung;
- Figur 7: eine beispielhafte Meßanordnung zur Messung von Kräften in x-Richtung und
- Figur 8: eine beispielhafte Meßanordnung zur Messung von Kräften in y-Richtung.

### DETAILIERTE BESCHREIBUNG DER ERFINDUNG

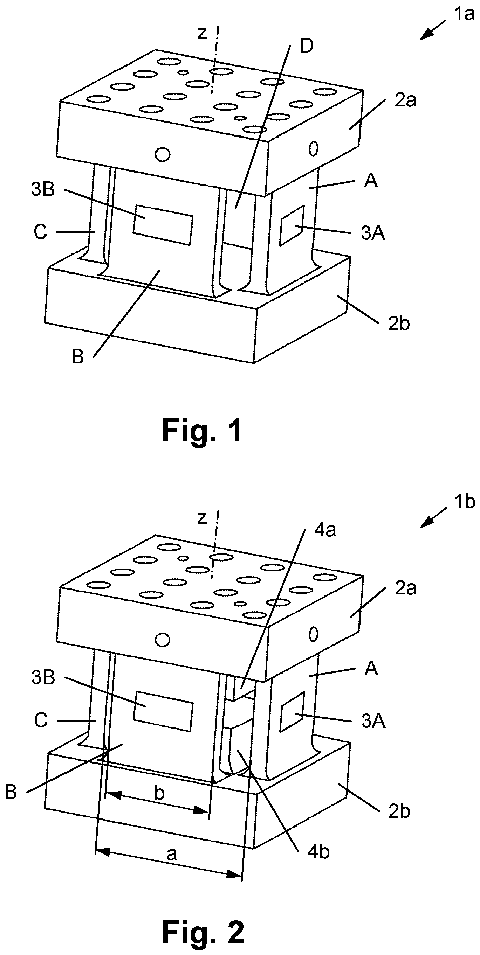

Fig. 1. zeigt ein erstes Beispiel eines Meßkörpers 1a zur Messung von Kräften, umfassend zwei voneinander beabstandete Basisteile 2a, 2b, mit je wenigstens einer Montagefläche zur Einleitung der zu messenden Kräfte und vier identische, voneinander beabstandete, entlang einer Längsachse z ausgerichtete und in einem Quadrat angeordnete Stege A..D, welche die beiden Basisteile 2a, 2b an in der Längsachse beabstandeten Verbindungsflächen verbinden. An jedem der genannten Stege A..D sind Kraftmeßsensoren 3A..3D angeordnet. Der Meßkörper 1a umfasst sonst keine weiteren Kraftmeßsensoren.

In dem in Fig. 1 konkret dargestellten Beispiel sind die Basisteile 2a, 2b identisch und weisen zueinander parallele Montageflächen auf, in denen eine Vielzahl von Montagelöchern vorgesehen ist. Die Stege A..D des Meßkörpers 1a sind in diesem Beispiel als parallel zur Längsachse z ausgerichtete Prismen ausgebildet, welche rechteckförmigen Querschnitt haben. Darüber hinaus kann der Meßkörper 1a einstückig ausgebildet sein und beispielsweise aus Vollmetall gefräst sein. Fig. 2 zeigt ein weiteres Beispiel eines Meßkörpers 1b, welcher dem Meßkörper 1a sehr ähnlich ist. Im Unterschied dazu sind aber im Inneren des Meßkörpers 1b podestartige Teile zu sehen, die Überbleibsel eines nicht vollständig ausgefrästen Innenraums sind. Diese stören den Meßvorgang aber nicht, sodass der Bearbeitungsvorgang für die Herstellung des Meßkörpers 1b durch diese Vorgangsweise deutlich verkürzt und die Standzeit des Bearbeitungswerkzeugs verlängert wird. In der Fig. 2 ist auch gut zu sehen, dass die Breite b eines Steges A..D des Meßkörpers 1b geringer ist als der Abstand a seiner beiden benachbarten Stege A..D. Dasselbe gilt auch für den Meßkörper 1a. Auf diese Weise wird einerseits sichergestellt, dass sich die Stege A..D frei bewegen können und andererseits auch ein Zugang für ein Fräswerkzeug vorhanden ist.

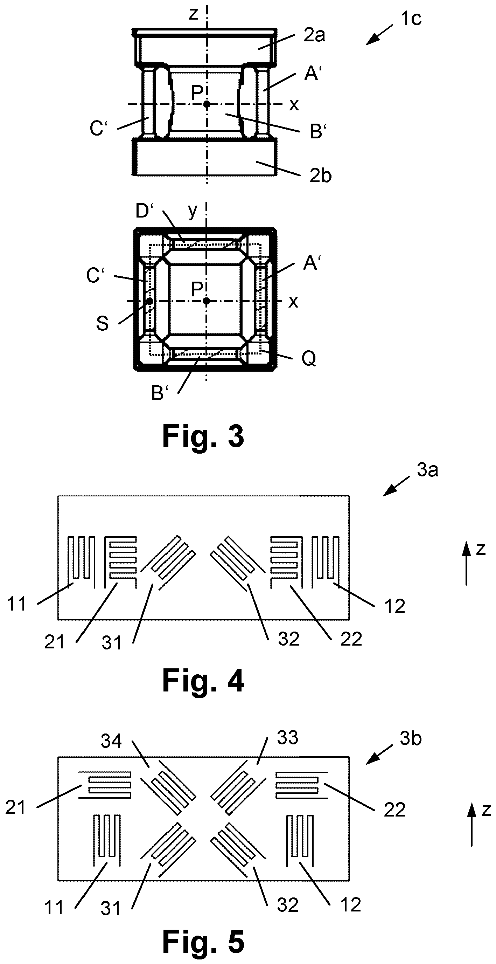

Fig. 3 zeigt schließlich ein drittes Beispiel eines Meßkörpers 1c in Grund- und Aufriss, welcher ebenfalls ähnlich aufgebaut ist wie die Meßkörper 1a und 1b. Im Unterschied dazu, weist der Meßkörper 1c aber keine prismatischen Stege, sondern sich in der Mitte verjüngende Stege A'..D' auf, die aber ebenfalls in jeder Schnittebene einen rechteckförmigen Querschnitt aufweisen.

In Fig. 3 ist auch gut zu sehen, dass die Stege A'..D' "im Quadrat" angeordnet sind. Dies bedeutet, dass die Schwerpunkte S der Stegquerschnitte in der Mitte der Seitenkanten eines Quadrats Q (in der Fig. 3 punktiert dargestellt) liegen. Zudem sind die Querschnitte zweier benachbarter Stege A'..D' um jeweils 90° gegeneinander verdreht, und der Gesamtquerschnitt der Stege A'..D' ist symmetrisch um die Hauptachsen des genannten Quadrats Q. Die Längsachse z des Meßkörpers 1c beziehungsweise der Stege A'..D' verläuft durch den Schwerpunkt des genannten Quadrats Q und ist normal zu diesem ausgerichtet. An dieser Stelle wird angemerkt, dass auch die Stege A..D der Meßkörper 1a, 1b "im Quadrat" angeordnet sind. Die Meßkörper 1a..1c weisen auch noch eine weitere spezielle Eigenschaft auf. Diese sind nämlich punktsymmetrisch um einen Punkt P ausgebildet.

Fig. 4 zeigt nun einen Kraftmeßsensor 3a, welcher mehrere Einzelsensoren 11, 12, 21, 22, 31, 32 umfasst, die jeweils eine Kraft in eine Richtung messen. Der Kraftsensor 3a bildet somit eine Gruppe solcher Einzelsensoren 11, 12, 21, 22, 31, 32, die in diesem Fall als Dehnmeßstreifen ausgebildet sind. Konkret umfasst der Kraftmeßsensor 3a:
- zwei erste Dehnmeßstreifen 11, 12 zur Messung einer Kraft in einer ersten Richtung z
- zwei zweite Dehnmeßstreifen 21, 22 zur Messung einer Kraft normal zur genannten Richtung z,
- einen dritten Dehnmeßstreifen 31 zur Messung einer Kraft in einem Winkel von +45° zur genannten Richtung z und
- einen vierten Dehnmeßstreifen 32 zur Messung einer Kraft in einem Winkel von -45° zur genannten Richtung z auf einem gemeinsamen Substrat.

Fig. 5 zeigt einen weiteren Kraftmeßsensor 3b, welcher dem in Fig. 4 dargestellten Kraftmeßsensor 3b sehr ähnlich ist. Im Unterschied dazu umfasst der Kraftmeßsensor 3b:
- zwei dritte Dehnmeßstreifen 31, 33 zur Messung einer Kraft in einem Winkel von +45° zur genannten Richtung z und
- zwei vierte Dehnmeßstreifen 32, 34 zur Messung einer Kraft in einem Winkel von -45° zur genannten Richtung z.

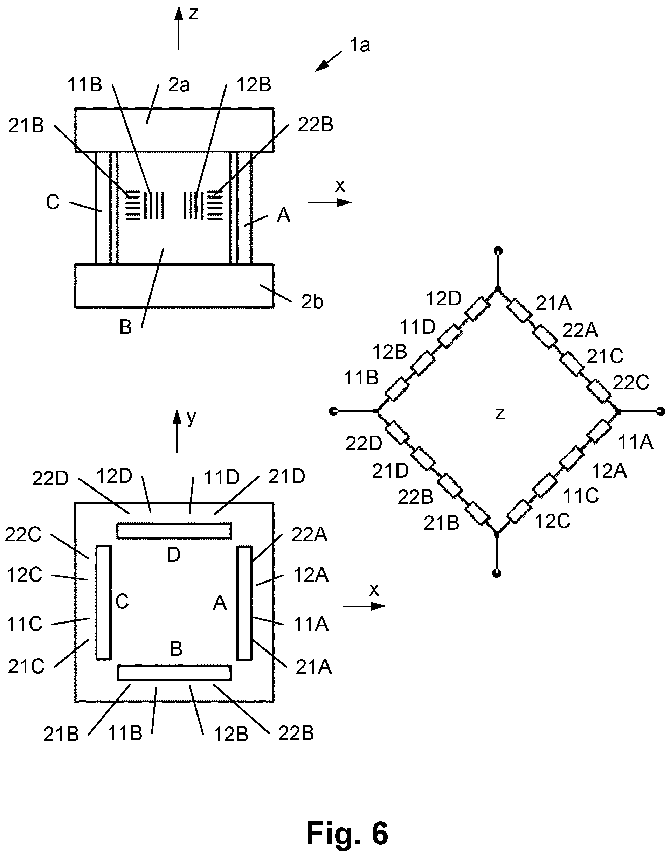

Die Figuren 6 bis 8 zeigen nun, wie ein Meßkörper 1a..1c gemeinsam mit einem Kraftsensor 3a, 3b verwendet werden kann:
Ein "Kraftmeßsensor" bildet im Rahmen der Erfindung eine Gruppe von Einzelsensoren. Im gegebenen Beispiel ist der Meßkörper 1a mit Kraftsensoren 3b (siehe Fig. 5) ausgestattet, welche jeweils eine Gruppe von Einzelsensoren 11, 12, 21, 22, 31..34 bilden. Beispielsweise werden diese aufgeklebt

Jeder Steg A..D des Meßkörpers 1a weist eine Meßebene auf, die parallel zur Längsachse z der Stege A..D ausgerichtet ist. In dem in Fig. 6 dargestellten Beispiel ist die Meßebene eines Stegs A..D überdies parallel zu einer Seitenkante des Quadrats Q (siehe auch Fig. 3) ausgerichtet. Mit anderen Worten befindet sich die Meßebene eines Stegs A..D auf dessen Außenfläche. In jeder Meßebene ist nun eine identische und symmetrische Anordnung von Einzelsensoren 11A..12D, 21A..22D, 31A..34D vorgesehen. Somit sind beispielsweise am Steg A:
- zwei erste Einzelsensoren 11A, 12A zur Messung einer Kraft in der genannten Längsachse z
- zwei zweite Einzelsensoren 21A, 22A zur Messung einer Kraft normal zur genannten Längsachse z,
- zwei dritte Einzelsensoren 31A, 33A zur Messung einer Kraft in einem Winkel von +45° zur genannten Längsachse z und
- zwei vierte Einzelsensoren 32A, 34A zur Messung einer Kraft in einem Winkel von - 45° zur genannten Längsachse z angeordnet.
Die Stege B..D sind in analoger Weise mit Einzelsensoren 11B..12D, 21B..22D, 31B..34D ausgestattet.

Zur Messung einer Kraft in der Längsachse z des Meßkörpers 1a wird eine Meßanordnung mit dem Meßkörper 1a vorgeschlagen, wobei in den vier Abschnitten einer Wheatstoneschen Meßbrücke zur Messung dieser Kraft bei gleichbleibendem Richtungssinn angeordnet sind:
- in einem ersten Abschnitt die ersten Einzelsensoren 11A, 12A eines ersten Stegs A und die ersten Einzelsensoren 11C, 12C eines gegenüberliegenden dritten Stegs C,
- in einem zweiten Abschnitt die zweiten Einzelsensoren 21B, 22B eines zum ersten Steg A benachbarten zweiten Stegs B und die zweiten Einzelsensoren 21D, 22D eines dem zweiten Steg B gegenüberliegenden vierten Stegs D,
- in einem dritten Abschnitt die ersten Einzelsensoren 11B, 12B des zweiten Stegs B und die ersten Einzelsensoren 11D, 12D des vierten Stegs D und
- in einem vierten Abschnitt die zweiten Einzelsensoren 21A, 22A des ersten Stegs A und die zweiten Einzelsensoren 21C, 22C des dritten Stegs C.

Im Betrieb wird an die Meßbrücke eine Spannungsquelle in der einen Diagonalen und ein Spannungsmessgerät in der anderen Diagonale angeschlossen. Die Auswertung des von der Meßbrücke erhaltenen Signals kann in an sich bekannter Weise erfolgen und wird daher nicht näher erläutert.

Zu beachten ist, dass in der Fig. 6 nur die zur Messung einer Kraft in der Längsrichtung z benötigten Dehnmeßstreifen 11A..12D, 21A..22D dargestellt sind. Die Dehnmeßstreifen 31A..34D wurden in der Fig. 6 der besseren Übersicht halber weggelassen.

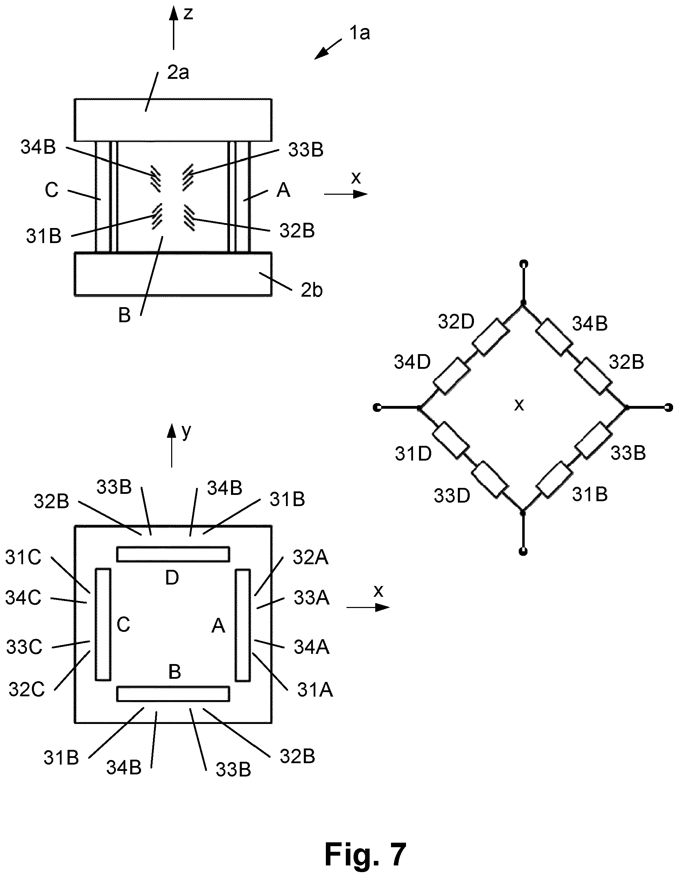

Fig. 7 zeigt nun wie eine Kraft normal auf eine Meßebene eines Stegs A..D gemessen werden kann. Konkret wird in Fig. 7 eine auf die Meßebene des Stegs A oder C gerichtete Kraft, also eine Kraft in x-Richtung gemessen. Dazu sind in den vier Abschnitten einer Wheatstoneschen Meßbrücke bei gleichbleibendem Richtungssinn angeordnet:
- in einem ersten Abschnitt die dritten Einzelsensoren 31B, 33B eines dem ersten Steg A benachbarten zweiten Stegs B,
- in einem zweiten Abschnitt die vierten Einzelsensoren 32B, 34B des zweiten Stegs B,
- in einem dritten Abschnitt die vierten Einzelsensoren 32D, 34D eines dem zweiten Steg B gegenüberliegenden vierten Stegs D und
- in einem vierten Abschnitt die dritten Einzelsensoren 31D, 33D des vierten Stegs D.
Wie aus dem dargestellten Beispiel leicht ersichtlich ist, wird der Aufbau der Meßbrücke auch bei einer Vertauschung der Stege A und C nicht verändert.

Zu beachten ist, dass in der Fig. 7 nur die zur Messung einer Kraft normal auf die Längsrichtung z benötigten Dehnmeßstreifen 31A..34D dargestellt sind. Die Dehnmeßstreifen 11A..12D, 21A..22D wurden in der Fig. 7 der besseren Übersicht halber weggelassen.

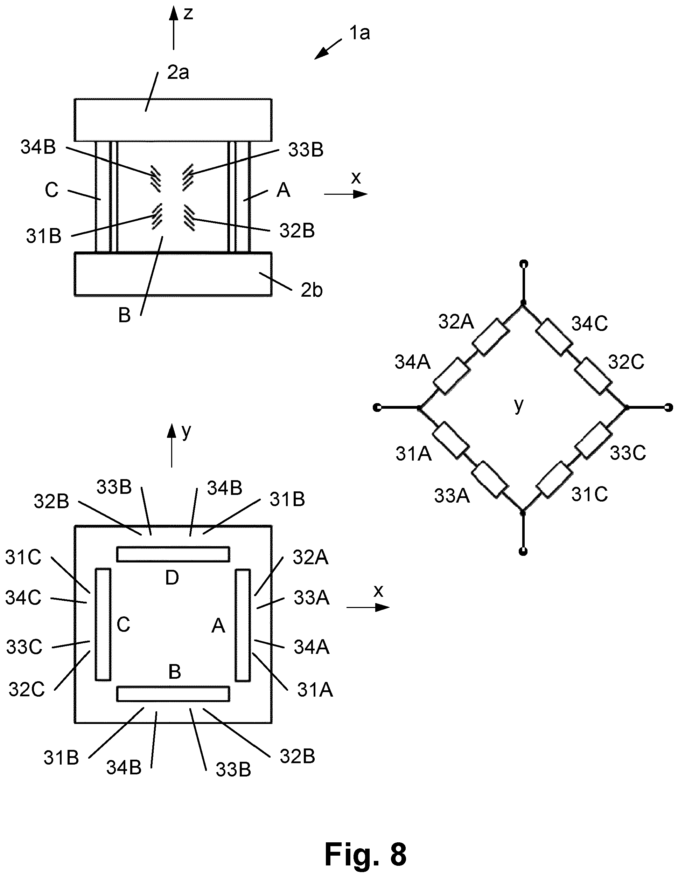

Fig. 8 zeigt nun wie eine normal auf die Meßebene des Stegs B oder D gerichtete Kraft, also eine Kraft in y-Richtung gemessen werden kann. Dabei tauschen die Stege A, C und B, D in der schon gezeigten Meßbrücke ihre Rollen. Somit sind in den vier Abschnitten einer Wheatstoneschen Meßbrücke bei gleichbleibendem Richtungssinn angeordnet:
- in einem ersten Abschnitt die dritten Einzelsensoren 31A, 33A eines dem zweiten Steg B benachbarten ersten Stegs A,
- in einem zweiten Abschnitt die vierten Einzelsensoren 32A, 34A des ersten Stegs A,
- in einem dritten Abschnitt die vierten Einzelsensoren 32C, 34C eines dem ersten Steg A gegenüberliegenden dritten Stegs C und
- in einem vierten Abschnitt die dritten Einzelsensoren 31C, 33C des dritten Stegs C.
Wie aus dem dargestellten Beispiel leicht ersichtlich ist, wird der Aufbau der Meßbrücke auch bei einer Vertauschung der Stege B und D nicht verändert.

Durch Superposition der Kraftkomponenten in x-, y- und z-Richtung kann auf einfache Weise die resultierende Kraft ermittelt werden.

In den Figuren 6 bis 8 wurde die Anordnung der Einzelsensoren 11, 12, 21, 22, 31..34 verwendet, so wie sie in der Fig. 5 dargestellt ist. Dies ist aber keinesfalls notwendig. Beispielsweise kann auch eine Anordnung nach Fig. 4 verwendet werden. In der Meßbrücke nach Fig. 6 sind dann anstelle der Sensoren 31 und 33 nur der Sensor 31 und anstelle der Sensoren 32 und 34 nur der Sensor 32 einzusetzen. Analog ist zu verfahren, wenn anstelle eines einzelnen Sensors mehrere Sensoren vorgesehen sind. Wird beispielsweise der Sensor 11 durch mehrere Einzelsensoren gebildet, so ist in den jeweiligen Meßbrücken eine Reihenschaltung der Einzelsensoren einzufügen usw.

Abschließend wird angemerkt, dass die dargestellten Beispiele zwar vorteilhafte Ausgestaltungen der Erfindung sind, Abwandlungen des offenbarten Prinzips aber möglich sind.. Es können die Basisteile 2a, 2b und deren Montageflächen der jeweiligen Einbausituation angepasst werden, ohne das Meßprinzip zu verändern. Sie müssen also nicht identisch sein. Weiterhin befinden sich die Meßebenen nicht zwangsläufig an der dargestellten Position oder in der dargestellten Lage. Denkbar wäre beispielsweise auch, dass sich die Meßebene an der Innenseite der Stege A..D, A'..D' oder auch auf deren Seitenflächen befindet. Auch ist es für das dargestellte Meßprinzip nicht unbedingt erforderlich, dass die Einzelsensoren 3a, 3b, 3A..3D, 11, 12, 21, 22, 31..34 als Dehnmeßstreifen ausgebildet sind. Denkbar wäre beispielsweise auch der Einsatz von Piezosensoren, magnetischen oder optischen Sensoren etc. Zu den letzeren zählen beispielsweise auch Faser-Bragg-Gitter. Auch ist es für das dargestellte Meßprinzip nicht notwendig dass der Meßkörper 1a..1c punktsymmetrisch um einen Punkt P ist, wenngleich dies aus Gründen der Symmetrie vorteilhaft ist.

Abschließend wird festgehalten, dass die Bestandteile der Figuren ggf. nicht maßstabsgetreu dargestellt sind und dass die einzelnen in den Figuren dargestellten Varianten auch den Gegenstand einer unabhängigen Erfindung bilden können. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen. Weiterhin wird angemerkt, dass die dargestellten Meßkörper, Kraftmeßsensoren und Meßanordnungen selbstverständlich mehr Komponenten als dargestellt aufweisen können, ohne dass dadurch der Grundgedanke der vorliegenden Erfindung verlassen werden würde.

## Patentansprüche

1. Meßkörper (1a..1c) zur Messung von Kräften, umfassend
- zwei voneinander beabstandete Basisteile (2a, 2b), mit je wenigstens einer Montagefläche zur Einleitung der zu messenden Kräfte,
- vier identische, voneinander beabstandete, entlang einer Längsachse (z) ausgerichtete und in einem Quadrat (Q) angeordnete Stege (A..D, A'..D'), welche mit den beiden Basisteilen (2a, 2b) an in der Längsachse beabstandeten Verbindungsflächen verbunden sind, **dadurch gekennzeichnet, dass** der Meßkörper (1a..1c) einstückig ausgebildet ist, wobei die Stege (A..D) als parallel zur Längsachse (z) ausgerichtete Prismen ausgebildet sind, wobei die Prismen/Stege (A..D) rechteckförmigen Querschnitt haben, und wobei der Meßkörper (1a..1c) Kraftmeßsensoren (3a, 3b, 3A..3D) an jedem der genannten Stege (A..D, A'..D') umfasst, wobei die Kraftmeßsensoren (3a, 3b, 3A..3D) an jedem der genannten Stege (A..D, A'..D') jeweils durch eine Gruppe von Einzelsensoren (11, 12, 21, 22, 31..34) gebildet sind, wobei die Einzelsensoren (11, 12, 21, 22, 31..34) jeweils eine Kraft in eine Richtung messen und dass der Meßkörper (1a..1c) nur solche Kraftmeßsensoren (3a, 3b, 3A..3D) umfasst.

2. Meßkörper (1a..1c) nach Anspruch 1, **dadurch gekennzeichnet, dass** die Kraftmeßsensoren (3a, 3b, 3A..3D) an jedem der Stege (A..D, A'..D') identisch sind.

3. Meßkörper (1a..1c) nach Anspruch 2, **dadurch gekennzeichnet, dass** jeder Steg (A..D, A'..D') eine Meßebene aufweist, die parallel zur Längsachse (z) der Stege (A..D, A'..D') ausgerichtet ist, und dass in jeder Meßebene eine identische und symmetrische Anordnung von Einzelsensoren (11, 12, 21, 22, 31..34) vorgesehen ist, jeweils umfassend
- je zwei erste Einzelsensoren (11, 12) zur Messung einer Kraft in der genannten Längsachse (z),
- je zwei zweite Einzelsensoren (21, 22) zur Messung einer Kraft normal zur genannten Längsachse (z),
- je zumindest einen dritten Einzelsensor (31, 33) zur Messung einer Kraft in einem Winkel von +45° zur genannten Längsachse (z) und
- je zumindest einen vierten Einzelsensor (32, 34) zur Messung einer Kraft in einem Winkel von -45° zur genannten Längsachse(z).

4. Meßkörper (1a..1c) nach Anspruch 3, **gekennzeichnet durch**
- je zwei dritte Einzelsensoren (31, 33) zur Messung einer Kraft in einem Winkel von +45° zur genannten Längsachse (z) und
- je zwei vierte Einzelsensoren (32, 34) zur Messung einer Kraft in einem Winkel von - 45° zur genannten Längsachse (z).

5. Meßkörper (1a..1c) nach einem der Ansprüche 1 bis 4, **dadurch gekennzeichnet, dass** die Einzelsensoren (11, 12, 21, 22, 31..34) als Dehnmeßstreifen ausgebildet sind.

6. Meßkörper (1a..1c) nach einem der vorgehenden Ansprüche, **dadurch gekennzeichnet, dass** die Basisteile (2a, 2b) identisch sind.

7. Meßkörper (1a..1c) nach einem der vorgehenden Ansprüche, **dadurch gekennzeichnet, dass** dieser punktsymmetrisch um einen Punkt (P) ausgebildet ist.

8. Meßkörper (1a..1c) nach Anspruch 1, **dadurch gekennzeichnet, dass** die Breite (b) eines Steges (A..D, A'..D') geringer ist als der Abstand (a) seiner beiden benachbarten Stege (A..D, A'..D').

9. Meßanordnung mit einem Meßkörper (1a..1c) nach einem der Ansprüche 3 bis 8, **dadurch gekennzeichnet, dass** in den vier Abschnitten einer Wheatstoneschen Meßbrücke zur Messung einer Kraft in der genannten Längsachse (z) bei gleichbleibendem Richtungssinn angeordnet sind:
- in einem ersten Abschnitt die ersten Einzelsensoren (11A, 12A) eines ersten Stegs (A) und die ersten Einzelsensoren (11C, 12C) eines gegenüberliegenden dritten Stegs (C),
- in einem zweiten Abschnitt die zweiten Einzelsensoren (21B, 22B) eines zum ersten Steg (A) benachbarten zweiten Stegs (B) und die zweiten Einzelsensoren (21D, 22D) eines dem zweiten Steg (B) gegenüberliegenden vierten Stegs (D),
- in einem dritten Abschnitt die ersten Einzelsensoren (11B, 12B) des zweiten Stegs (B) und die ersten Einzelsensoren (11D, 12D) des vierten Stegs (D) und
- in einem vierten Abschnitt die zweiten Einzelsensoren (21A, 22A) des ersten Stegs (A) und die zweiten Einzelsensoren (21C, 22C) des dritten Stegs (C).

10. Meßanordnung mit einem Meßkörper (1a..1c) nach einem der Ansprüche 3 bis 8, **dadurch gekennzeichnet, dass** in den vier Abschnitten einer Wheatstoneschen Meßbrücke zur Messung einer Kraft normal auf die Meßebene eines ersten Stegs (A) bei gleichbleibendem Richtungssinn angeordnet sind:
- in einem ersten Abschnitt die dritten Einzelsensoren (31B, 33B) eines dem ersten Steg (A) benachbarten zweiten Stegs (B),
- in einem zweiten Abschnitt die vierten Einzelsensoren (32B, 34B) des zweiten Stegs (B),
- in einem dritten Abschnitt die vierten Einzelsensoren (32D, 34D) eines dem zweiten Steg (B) gegenüberliegenden vierten Stegs (D) und
- in einem vierten Abschnitt die dritten Einzelsensoren (31D, 33D) des vierten Stegs (D).

## Claims

1. Measuring body (1a ... 1c) for measuring forces, comprising
- two spaced apart base parts (2a, 2b), each comprising at least one assembly surface for introducing the forces to be measured,
- four identical, mutually spaced apart webs (A ... D, A' ... D') that are aligned along a longitudinal axis (z) and arranged in a square (Q), said webs being attached to the two base parts (2a, 2b) at connection areas that are spaced apart along the longitudinal axis, **characterized in that** the measuring body (1a ... 1c) has an integral embodiment, wherein the webs (A ... D) are embodied as prisms that are aligned parallel to the longitudinal axis (z), wherein the prisms/webs (A ... D) have a rectangular cross-section and wherein the measuring body (1a ... 1c) comprises force sensors (3a, 3b, 3A ... 3D) at each one of the aforementioned webs (A ... D, A' ... D'), wherein the force sensors (3a, 3b, 3A ... 3D) at each of the aforementioned webs (A ... D, A' ... D') are formed by a group of individual sensors (11, 12, 21, 22, 31 ... 34) in each case, wherein the individual sensors (11, 12, 21, 22, 31 ... 34) each measure a force in one direction, and **in that** the measuring body (1a ... 1c) only comprises such force sensors (3a, 3b, 3A ... 3D).

2. Measuring body (1a ... 1c) according to Claim 1, **characterized in that** the force sensors (3a, 3b, 3A ... 3D) and each one of the webs (A ... D, A' ... D') are identical.

3. Measuring body (1a ... 1c) according to Claim 2, **characterized in that** each web (A ... D, A' ... D') has a measuring plane which is aligned parallel to the longitudinal axis (z) of the webs (A ... D, A' ... D') and **in that** an identical and symmetric arrangement of individual sensors (11, 12, 21, 22, 31 ... 34) is provided in each measuring plane, respectively comprising
- in each case two first individual sensors (11, 12) for measuring a force along the aforementioned longitudinal axis (z),
- in each case two second individual sensors (21, 22) for measuring a force that is normal to the aforementioned longitudinal axis (z),
- in each case at least one third individual sensor (31, 33) for measuring a force at an angle of +45° in relation to the aforementioned longitudinal axis (z) and
- in each case at least one fourth individual sensor (32, 34) for measuring a force at an angle of -45° in relation to the aforementioned longitudinal axis (z).

4. Measuring body (1a ... 1c) according to Claim 3, **characterized by**
- in each case two third individual sensors (31, 33) for measuring a force at an angle of +45° in relation to the aforementioned longitudinal axis (z) and
- in each case two fourth individual sensors (32, 34) for measuring a force at an angle of -45° in relation to the aforementioned longitudinal axis (z).

5. Measuring body (1a ... 1c) according to any one of Claims 1 to 4, **characterized in that** the individual sensors (11, 12, 21, 22, 31 ... 34) are embodied as strain gauges.

6. Measuring body (1a ... 1c) according to any one of the preceding claims, **characterized in that** the base parts (2a, 2b) are identical.

7. Measuring body (1a ... 1c) according to any one of the preceding claims, **characterized in that** this has a point-symmetric embodiment about a point (P).

8. Measuring body (1a ... 1c) according to Claim 1, **characterized in that** the width (b) of a web (A ... D, A' ... D') is smaller than the spacing (a) between its two adjacent webs (A ... D, A' ... D').

9. Measuring assembly comprising a measuring body (1a ... 1c) according to any one of Claims 3 to 8, **characterized in that** the following are arranged in the four sections of a Wheatstone measuring bridge for measuring a force along the aforementioned longitudinal axis (z) with an unchanging sense of direction:
- in a first section, the first individual sensors (11A, 12A) of a first web (A) and the first individual sensors (11C, 12C) of an opposing third web (C);
- in a second section, the second individual sensors (21B, 22B) of a second web (B) that is adjacent to the first web (A) and the second individual sensors (21D, 22D) of a fourth web (D) that lies opposite to the second web (B);
- in a third section, the first individual sensors (11B, 12B) of the second web (B) and the first individual sensors (11D, 12D) of the fourth web (D); and
- in a fourth section, the second individual sensors (21A, 22A) of the first web (A) and the second individual sensors (21C, 22C) of the third web (C).

10. Measuring assembly comprising a measuring body (1a ... 1c) according to any one of Claims 3 to 8, **characterized in that** the following are arranged in the four sections of a Wheatstone measuring bridge for measuring a force normal to the measuring plane of a first web (A) with an unchanging sense of direction:
- in a first section, the third individual sensors (31B, 33B) of a second web (B) that is adjacent to the first web (A);
- in a second section, the fourth individual sensors (32B, 34B) of the second web (B);
- in a third section, the fourth individual sensors (32D, 34D) of a fourth web (D) that lies opposite to the second web (B); and
- in a fourth section, the third individual sensors (31D, 33D) of the fourth web (D).

## Revendications

1. Corps de mesure (1a .. 1c) pour la mesure de forces, comprenant
- deux pièces de base (2a, 2b) espacées l'une de l'autre, avec chacune au moins une face de montage pour l'introduction des forces à mesurer,
- quatre ailes identiques (A .. D, A' .. D'), espacées l'une de l'autre, orientées le long d'un axe longitudinal (z) et agencées en un carré (Q), qui sont assemblées aux deux pièces de base (2a, 2b) par des faces d'assemblage espacées selon l'axe longitudinal,
**caractérisé en ce que** le corps de mesure (1a .. 1c) est réalisé en une seule pièce, dans lequel les ailes (A .. D) sont réalisées en forme de prismes orientés parallèlement à l'axe longitudinal (z), dans lequel les prismes/ailes (A .. D) ont une section transversale rectangulaire, et dans lequel le corps de mesure (1a .. 1c) comprend des capteurs de mesure de force (3a, 3b, 3A .. 3D) sur chacune desdites ailes (A .. D, A' .. D'), dans lequel les capteurs de mesure de force (3a, 3b, 3A .. 3D) sont formés sur chacune desdites ailes (A ..D, A' .. D') respectivement par un groupe de capteurs individuels (11, 12, 21, 22, 31 .. 34), dans lequel les capteurs individuels (11, 12, 21, 22, 31 .. 34) mesurent respectivement une force dans une direction et **en ce que** le corps de mesure (1a .. 1c) ne comprend que de tels capteurs de mesure de force (3a, 3b, 3A .. 3D).

2. Corps de mesure (1a .. 1c) selon la revendication 1, **caractérisé en ce que** les capteurs de mesure de force (3a, 3b, 3A .. 3D) sont identiques sur chacune des ailes (A .. D, A' .. D').

3. Corps de mesure (1a .. 1c) selon la revendication 2, **caractérisé en ce que** chaque aile (A .. D, A' .. D') présente un plan de mesure, qui est orienté parallèlement à l'axe longitudinal (z) des ailes (A .. D, A' .. D'), et **en ce qu'**il est prévu dans chaque plan de mesure un agencement identique et symétrique de capteurs individuels (11, 12, 21, 22, 31 .. 34), comprenant respectivement
- chaque fois deux premiers capteurs individuels (11, 12) pour la mesure d'une force dans ledit axe longitudinal (z),
- chaque fois deux deuxièmes capteurs individuels (21, 22) pour la mesure d'une force normalement audit axe longitudinal (z),
- chaque fois au moins un troisième capteur individuel (31, 33) pour la mesure d'une force sous un angle de +45° par rapport audit axe longitudinal (z), et
- chaque fois au moins un quatrième capteur individuel (32, 34) pour la mesure d'une force sous un angle de -45° par rapport audit axe longitudinal (z).

4. Corps de mesure (1a .. 1c) selon la revendication 3, **caractérisé par**
- chaque fois deux troisièmes capteurs individuels (31, 33) pour la mesure d'une force sous un angle de +45° par rapport audit axe longitudinal (z), et
- chaque fois deux quatrièmes capteurs individuels (32, 34) pour la mesure d'une force sous un angle de -45 ° par rapport audit axe longitudinal (z).

5. Corps de mesure (1a .. 1c) selon l'une quelconque des revendications 1 à 4, **caractérisé en ce que** les capteurs individuels (11, 12, 21, 22, 31 .. 34) sont réalisés en forme de jauges extensométriques.

6. Corps de mesure (1a .. 1c) selon l'une quelconque des revendications précédentes, **caractérisé en ce que** les pièces de base (2a, 2b) sont identiques.

7. Corps de mesure (1a .. 1c) selon l'une quelconque des revendications précédentes, **caractérisé en ce qu'**il est formé avec la symétrie ponctuelle autour d'un point (P).

8. Corps de mesure (1a .. 1c) selon la revendication 1, **caractérisé en ce que** la largeur (b) d'une aile (A .. D, A' .. D') est plus petite que la distance (a) de ses deux ailes voisines (A .. D, A' .. D').

9. Agencement de mesure avec un corps de mesure (1a .. 1c) selon l'une quelconque des revendications 3 à 8, **caractérisé en ce que** sont disposés dans les quatre branches d'un pont de mesure de Wheatstone pour la mesure d'une force selon l'axe longitudinal (z) avec le sens de la direction constant:
- dans une première branche les premiers capteurs individuels (11A, 12A) d'une première aile (A) et les premiers capteurs individuels (11C, 12C) d'une troisième aile opposée (C),
- dans une deuxième branche les deuxièmes capteurs individuels (21B, 22B) d'une deuxième aile (B) voisine de la première aile (A) et les deuxièmes capteurs individuels (21D, 22D) d'une quatrième aile (D) opposée à la deuxième aile (B),
- dans une troisième branche les premiers capteurs individuels (11B, 12B) de la deuxième aile (B) et les premiers capteurs individuels (11D, 12D) de la quatrième aile (D), et
- dans une quatrième branche les deuxièmes capteurs individuels (21A, 22A) de la première aile (A) et les deuxièmes capteurs individuels (21C, 22C) de la troisième aile (C).

10. Agencement de mesure avec un corps de mesure (1a .. 1c) selon l'une quelconque des revendications 3 à 8, **caractérisé en ce que** sont disposés dans les quatre branches d'un pont de mesure de Wheatstone pour la mesure d'une force normalement au plan de mesure d'une première aile (A) avec un sens de la direction constant:
- dans une première branche les troisièmes capteurs individuels (31B, 33B) d'une deuxième aile (B) voisine de la première aile (A),
- dans une deuxième branche les quatrièmes capteurs individuels (32B, 34B) de la deuxième aile (B),
- dans une troisième branche les quatrièmes capteurs individuels (32D, 34D) d'une quatrième aile (D) opposée à la deuxième aile (B), et
- dans une quatrième branche les troisièmes capteurs individuels (31D, 33D) de la quatrième aile (D).
